# EUROPEAN PATENT APPLICATION

(11) **EP 2 123 925 A1**
(43) Date of publication of application: **25.11.2009**
(21) Application number: 08711755.2
(22) Date of filing: 21.02.2008
(51) Int. Cl.: F16C 33/46, F16C 19/30

(54) **THRUST ROLLER BEARING**

(30) Priority: 22.02.2007 JP 2007042699
(71) Applicant: JTEKT Corporation, Osaka-shi Osaka 542-8502 (JP)
(72) Inventor: TAKAMIZAWA, Wataru, Osaka-shi Osaka 542-8502 (JP); CHIHARA, Katsuhiko, Osaka-shi Osaka 542-8502 (JP)
(74) Representative: Hager, Thomas Johannes
(86) International application number: PCT/JP2008/052972
(87) International publication number: WO 2008/102846

(57) **Abstract**

In a thrust roller bearing which includes a cage formed with rectangular pockets at plural circumferential positions of an annular plate by punching in a thickness direction thereof and a plurality of rollers accommodated in the respective pockets of the cage, a convex projecting toward a rotating center of an axial end surface of the roller is provided at a radially outer side and a radially inner side of an inner wall surface of each of the pockets, and a concave contacting with the convex in a substantial fitting fashion is provided at the end surface of the roller.

## Description

### Technical Field

The present invention relates to a thrust roller bearing in which a sliding resistance at the time of the bearing being rotating is reduced to lower a rotation torque.

### Background Art

Currently, as impact of the vehicles on a global environment is large, there is a problem to improve fuel consumption. A number of thrust roller bearings, 10 or more in average, are used in an automatic transmission. In consideration of contributing to the high fuel consumption by reducing a running torque of the thrust roller bearing, an effort to reduce the running torque is being exerted.
The related thrust roller bearing includes a single annular plate. Pockets having rectangular shape seeing from the top for accommodating rollers are formed at plural circumferential positions of the plate by punching in a thickness direction thereof. Convexes which respectively contact with a center of an axial outer end surface and a center of an axial inner end surface of the roller accommodated in the pocket for pivotally supporting the roller are formed on an inner wall surface of the pocket (refer to JP2004-211824, for example). As another method, it is proposed to provide plural rows of rollers.

### Disclosure of the Invention

### Problem to be solved by the Invention

In the related thrust roller bearing, the convexes which respectively contact with the center of the axial outer end surface and the center of the axial inner end surface of the roller accommodated in the pocket for pivotally supporting the roller are formed on the inner wall surface of the pocket. Thereby, the sliding resistance at the time of bearing rotation is reduced by bringing the convexes into contact with the centers of the roller end surfaces, respectively.
However, in the actual condition at the time of the bearing rotation, the roller is moved in a circumferential direction within the pocket of the cage and always pushes the cage. Thus, the center of the roller is displaced from the center of the pocket in a width direction. Therefore, the running torque may be increased due to the sliding resistance between the end surface of the roller and the convexes of the pocket of the cage. Further, for a thrust roller bearing in which a cage for holding a plurality of rollers is interposed between a pair of races, there is a clearance between the cage and the races and the cage can move upwardly and downwardly by an amount of the clearance. As the cage is not guided at a center of the roller if the roller is urged radially outwardly due to centrifugal force, the cage may move upwardly and downwardly and contact with the race. Therefore, the contact between the cage and the race may deteriorate the running torque.
The invention was made in order to solve the problem, and an obj ect is to provide a thrust roller bearing in which a running torque is reduced by reducing a sliding resistance between an end surface of a roller and a convex of a pocket of a cage in the case that the roller moves in a width direction of the pocket at the time of the bearing rotation and in the case that the roller urges radially outwardly due to a centrifugal force.

### Means for Solving the Problem

A thrust roller bearing of an aspect of the present invention comprises: a cage formed with rectangular pockets at plural circumferential positions of an annular plate; and a plurality of rollers accommodated in the respective pockets of the cage, wherein a convex projecting toward a rotating center of an axial end surface of the roller is provided at at least one of a radially outer side and a radially inner side of an inner wall surface of each of the pockets, and wherein a concave contacting with the convex in a substantial fitting fashion is provided at the end surface of the roller.
A thrust roller bearing of another aspect of the invention comprises: a pair of races; a cage which is interposed between the pair of races and is provided with pockets at plural circumferential positions thereof; and a plurality of rollers retained by the respective pockets of the cage, wherein a convex projecting toward a rotating center of an axial end surface of the roller is provided at at least a radially outer side among the radially outer side and an inner wall surface of each of the pockets, and wherein a concave contacting with the convex in a substantial fitting fashion is provided at the end surface of the roller.
Further, a radius of curvature of the convex provided in an arc shape at a radially outer side of the inner wall surface of the pocket is equal to or smaller than a radius of curvature of the concave provided in an arc shape at the end surface of the roller.

### Effect of the Invention

In the thrust roller bearing of the aspect of the present invention, the convex projecting toward the rotating center of the axial end surface of the roller is provided at the radially outer side and the radially inner side of the inner wall surface of each of the pockets, and the concave contacting with the convex in the substantial fitting fashion is provided at the end surface of the roller. Thus, when the rotating direction of the cage changes at the time of bearing rotation, the center portion of the concave portion provided at the opposite end surfaces in the axial direction of the roller contacts with the apex center of the convex provided at the radially outer side and the radially inner side of the inner wall surface of the pocket in the substantially fitting fashion, and the concave of the opposite end surfaces of the roller is pivotally supported by the apex center of the convex of the pocket. Therefore, the sliding resistance of the axial opposite end surfaces of the needle roller with respect to the cage becomes close to zero, and thereby there is an effect of reducing the running torque of the thrust needle roller bearing.

In the thrust roller bearing of the other aspect of the invention, the cage is interposed between the pair of races and is provided with pockets at plural circumferential positions thereof, the convex projecting toward the rotating center of the axial end surface of the roller is provided at at least the radially outer side among the radially outer side and the inner wall surface of each of the pockets, and the concave contacting with the convex in a substantial fitting fashion is provided at the end surface of the roller. Thus, the center of the concave provided at at least the axially outer end surface of the needle roller always contacts with the apex center of the convex provided at the radially outer side of the inner wall surface of the pocket, and an effect is provided in which the cage does not contact with the race as the cage does not vertically move.

As the radius of curvature of the convex provided in the arc shape at the radially outer side of the inner wall surface of the pocket is equal to or smaller than the radius of curvature of the concave provided the an arc shape at the end surface of the roller, an effect is provided in which the torque can be surely reduced in the thrust roller bearing, and the cage can be surely prevented from contacting with the race in the thrust roller bearing in which the cage is interposed between the pair of races.

### Brief description of drawings

Fig. 1 is a plan view showing a thrust needle roller bearing according to a first embodiment of the invention.
Fig. 2 is an enlarged perspective view showing a periphery of a pocket of a cage of the thrust needle roller bearing.
Fig. 3 is an enlarged cross sectional view showing the peripheral of the pocket of the cage of the thrust needle roller baring.
Fig. 4 is an enlarged plan view showing a periphery of a pocket of a thrust needle roller bearing according to a second embodiment of the invention.

### Best mode for carrying out the Invention

### First Embodiment

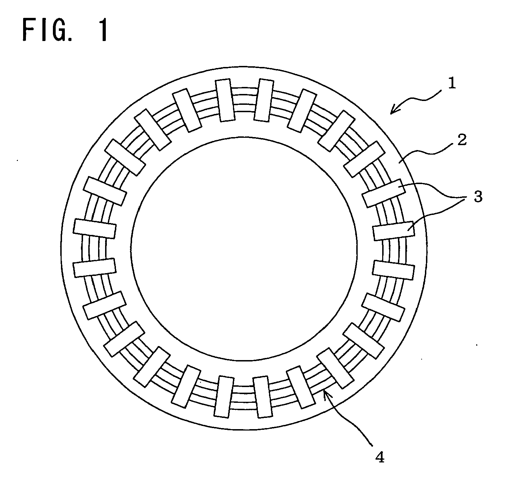

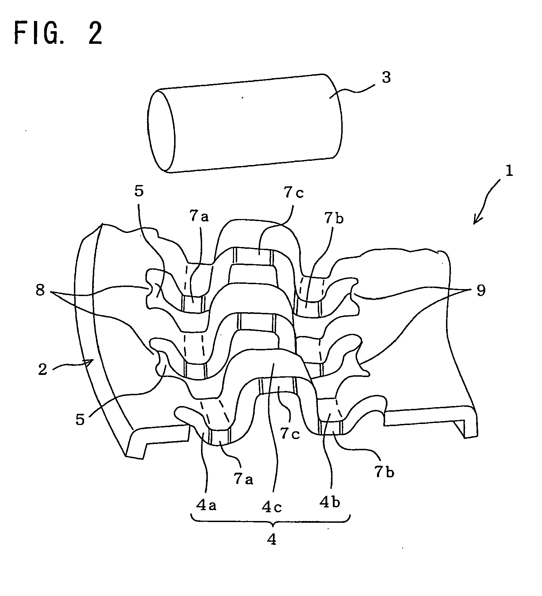

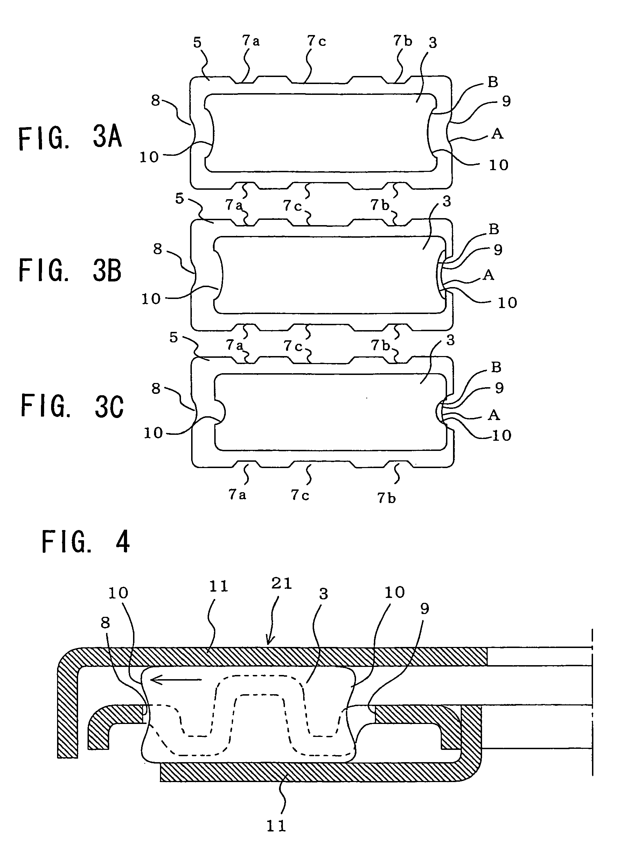

Fig. 1 is a plan view showing a thrust needle roller bearing according to a first embodiment of the invention. Fig. 2 is an enlarged perspective view showing a periphery of a pocket of a cage of the thrust needle roller bearing. Fig. 3 is an enlarged cross sectional view showing the peripheral of the pocket of the cage of the thrust needle roller baring.
The thrust needle roller bearing 1 according to the first embodiment of the invention includes a cage 2 and needle rollers 3 as a plurality of rollers.
The cage is produced from a single annular plate. A corrugated bent portion 4 having a corrugated shape in a radial direction is provided at a radial middle area of the cage by a drawing work.
The corrugated bent portion 4 includes a radially outer projected portion 4a, a radially inner projected portion 4b and a middle projected portion 4c which are equally projected in a thickness direction alternately in one side and in the other side. The radially outer projected portion 4a and the radially inner projected portion 4b are projected in the thickness direction of the cage 2 in the one side, and the middle projected portion 4c is projected in the thickness direction in the other side.

Pockets 5, each of which has a rectangular shape viewing from the top, are formed at plural circumferential positions within an area between a bent start point at a radially outer side and a bent start point at a radially inner side in the corrugated bent portion 4 of the cage 2 by punching in a thickness direction. The needle rollers 3 are rotatably and unseparately accommodated in the respective pockets 5.
That is, claws 7a, 7b, 7c projecting toward an inside of the pocket 5 are provided at three apex portions of the radially outer projected portions 4a, the radially inner projected portions 4b and the middle projected portions 4c which are located at both circumferential sides in the inner wall surface of the pocket. The claws 7a, 7b, 7c reduce a width at the radial three positions of the pocket 5 smaller than a diameter of the needle roller. With this, the needle roller 3 does not come off from the pocket 5. Incidentally, the needle roller 3 is accommodated in the pocket 5 by forcible fitting.

Convexes 8, 9, each of which has a curved arc shape viewing from the top, project toward the pocket 5 and pivotally supports the needle roller 3 are provided at a radially outer side and a radially inner side of the inner wall surface of each pocket 5. An apex center of the convexes 8, 9 is provided at a center in the width direction of the pocket.
A radius of curvature of the convexes 8, 9 is denoted by "A".
The needle roller 3 accommodated in each pocket 5 is made of bearing steel, and concaves 10 curved in an arc shape are formed at axial opposite end surfaces thereof. A radius of curvature of the concaves 10 is denoted by "B".
The radius of curvature A of the convexes 8, 9 and the radius of curvature B of the concaves 10 are set to satisfy the following relation.
A ≤ B
That is, as shown in Fig. 3A, the radius of curvature A of the convexes 8, 9 of the pocket 5 is set to be smaller than the radius of curvature B of the concaves 10 of the roller 3, or as shown in Fig. 3B, the radius of curvature A of the convexes 8, 9 of the pocket 5 is set to be equal to the radius of curvature B of the concaves 10 of the roller 3.

Next, a manufacturing procedure of the cage 2 will be briefly explained.
First, a center hole is formed at a predetermined position of a single metal plate (SPCD of JIS standard etc.) by punching. Then, the corrugated bent portion 4 is formed by drawing work. Thereafter, the pockets are formed by punching and the outer portion is cut off. The convexes 8, 9 and the claws 7a-7c are formed at the same time when the pockets 5 are formed.
Therefore, as a shape of a punching mold for the pockets, the mold is manufactured so as to correspond to a shape of the pocket 5 including the convexes 8, 9 and the claws 7a-7c.
The concaves 10 are formed at the axial opposite ends of the needle rollers 3 by a punch or cutting.

In the thrust needle roller bearing 1 having the above cage 2, in the case that the bearing is used in such a manner that the cage 2 rotates in one direction at the time of the bearing rotation, since the needle rollers 3 moves in the width direction of the pocket at the time of the bearing rotation in such a manner that the cage rotates in the one direction, the apex center of the convexes 8, 9 provided at the pocket 5 may be offset in a direction and by an amount in which the needle roller moves.

In the first embodiment, in the case that the rotating direction of the cage 2 changes at the time of the bearing rotation, the arc shaped curved concaves 10 are formed at the axial opposite end surfaces of the needle roller 3, the arc shaped curved convexes 8, 9 at the radially outer side and the radially inner side of the inner wall surface of the pocket 5 of the cage 2 are provided to be located at a center in the width direction of the pocket 5, and the radius of curvature A of the convexes 8, 9 are set to be equal to or smaller than the radius of curvature B of the concaves 10 of the needle roller 3.

With this arrangement, even if the needle roller 3 tends to move in the pocket width direction at the time of the bearing rotation, movement of the needle roller 3 which has at the opposite ends the concaves 10 which contact with the convexes 8, 9 provided at the radially inner side and the radially outer side of the pocket in the fitting fashion is blocked. Thus, the center portions of the concaves 10 provided at the axial opposite end surfaces of the needle roller 3 contact with the apex centers of the convexes 8, 9 provided at the radial outer side and the radial inner side of the inner wall surface of the pockets in the substantial fitting fashion, and the concaves 10 at the opposite end surfaces of the needle roller 3 are brought into a state of being pivotally supported by the apex centers of the convexes 8, 9 of the pocket 5, respectively. Therefore, the sliding resistance of the axial opposite end surfaces of the needle roller 3 with respect to the cage 2 becomes close to zero, and thereby the running torque of the thrust needle roller bearing 1 is reduced.

Incidentally, force for blocking movement of the roller 3 having at the opposite ends the concaves 10 which contact with the convexes 8 provided at the radially inner side and the radially outer side of the inner wall surface of the pocket can be made large in the case that the radius of curvature A of the convexes 8, 9 of the pocket is set to be equal to the radius of curvature B of the concaves 10 of the needle roller 3 as compared with the case the radius of curvature A of the convexes 8, 9 of the pocket is set to be smaller than the radius of curvature B of the concaves 10 of the needle roller 3 because contact areas between the convexes and the concaves are large in the former case.
As shown in Fig. 3C, when the radius of curvature A of the convexes 8, 9 of the pocket is set to be larger than the radius of curvature B of the concaves 10 of the needle roller 3, an edge of the concave 10 provided at the axially outer end surface of the needle roller 3 is abutted against the convex 8 provided at the radially outer side of the inner wall surface of the pocket 5. Thereby, the sliding resistance occurs and the running torque of the thrust roller bearing 1 is increased.
In the first embodiment, the example in which the convexes 8, 9 are provided at the radially outer side and the radially inner side of the inner wall surface of the pocket 5 is employed. However, employing either side is acceptable.

### Second Embodiment

Fig. 4 is an enlarged plan view showing a periphery of a pocket of a thrust needle roller bearing according to a second embodiment of the invention.
The second embodiment embodies a thrust needle roller bearing 21 in which a cage 2 for holding a plurality of needle rollers 3 is interposed between a pair of races 11 formed by, for example, bearing steel. Portions similar in construction to the corresponding portions of the first embodiment will be designated by identical reference numerals, and explanation thereof will be omitted.

In the same manner as the first embodiment, in the thrust needle roller bearing 21 according to the second embodiment, convexes 8, 9 each of which has an arc curved shape viewing from the top, projects toward the pocket 5 and pivotally supports the needle roller 3, are provided at a radially outer side and a radially inner side of the inner wall surface of each pocket 5. An apex center of each convexes 8, 9 is provided at a center in a width direction of the pocket. A radius of curvature A of the convexes 8, 9 is denoted by "A".
Concaves 10, each of which has an arc curved shape, are formed at axially opposite end surfaces of the roller 3 accommodated in each pocket 5. A radius of curvature B of the concaves 10 is denoted by "B".
The radius of curvature A of the convexes 8, 9 and the radius of curvature B of rte concaves 10 of the roller are set to satisfy the following relation.
A ≤ B

Accordingly, in the case that the rotating direction of the cage 2 is change at the time of the bearing rotation, in the same manner as the first embodiment, even if the needle roller 3 tends to move in the pocket width direction at the time of the bearing rotation, the movement of the needle 3 having at the opposite ends the concaves 10 which contact with the convex 8, 9 provided at the radially inner side and the radially outer side of the inner wall surface of the pocket 5 in the fitting fashion is blocked. Thus, the center portions of the concaves 10 provided at the axial opposite end surfaces of the needle roller 3 contact with the apex centers of the convexes 8, 9 provided at the radial outer side and the radial inner side of the inner wall surface of the pockets in the substantial fitting fashion, and the concaves 10 at the opposite end surfaces of the needle roller 3 are brought into a state of being pivotally supported by the apex centers of the convexes 8, 9 of the pocket 5, respectively. Therefore, the sliding resistance of the axial opposite end surfaces of the needle roller 3 with respect to the cage 2 becomes close to zero, and thereby the running torque of the thrust needle roller bearing 1 is reduced.

Incidentally, force for blocking movement of the roller 3 having at the opposite ends the concaves 10 which contact with the convexes 8 provided at the radially inner side and the radially outer side of the inner wall surface of the pocket can be made large in the case that the radius of curvature A of the convexes 8, 9 of the pocket is set to be equal to the radius of curvature B of the concaves 10 of the needle roller 3 as compared with the case the radius of curvature A of the convexes 8, 9 of the pocket is set to be smaller than the radius of curvature B of the concaves 10 of the needle roller 3 because contact areas between the convexes and the concaves are large in the former case.
If the radius of curvature A of the convexes 8, 9 of the pocket is set to be larger than the radius of curvature B of the concaves 10 of the needle roller 3, the edge of the concave 10 provided at the axially outer end surface of the needle roller 3 is brought into edge contact with the convex 8 provided at the outer diameter side of the inner wall surface of the pocket 5, and the sliding resistance may generate, thereby the running torque of the thrust roller bearing 21 may increase.

Further, in the second embodiment, if the needle roller 3 is urged axially outwardly in a direction of an arrow shown in Fig. 4 by the action of the centrifugal force, a force in which the apex center of the convex 8 provided at the radially outer side of the inner wall surface of the pocket 5 moves toward the center of the concave 10 provided at the axially outer end surface of the needle roller 3 is produced, thereby the center of the concave 10 provided at the axially outer end surface of the needle roller 3 always contacts with the apex center of the convex 8 provided at the radially outer side of the inner wall surface of the pocket 5, and the cage 2 does not contact with the race 11 as the cage does not vertically move.
In the above first and second embodiments, an example in which the single annular plate is punched out is employed.
However, the present invention can by applied to other types of cages for the thrust roller bearing having the convexes 8, 9, such as a resin-made product. Further, although an example in which the convex of the pocket and the concave of the end surface of the roller are curved in arc shape is employed, various shapes, such as a polygon including a triangle, a square etc. a conical shape, and the like can be employed for the shape of the convex and the concave.
Although in the first and second embodiments, the thrust needle roller bearing is used as the example, the invention can be applied to a typical thrust roller bearing.

### Industrial Applicability

When this thrust needle roller bearing 1, 21 is used in a transmission of a vehicle, running torque of the transmission is reduced and it can contribute to improving fuel consumption.

## Claims

1. A thrust roller bearing comprising:
a cage formed with rectangular pockets at plural circumferential positions of an annular plate; and
a plurality of rollers accommodated in the respective pockets of the cage,
wherein a convex projecting toward a rotating center of an axial end surface of the roller is provided at at least one of a radially outer side and a radially inner side of an inner wall surface of each of the pockets, and
wherein a concave contacting with the convex in a substantial fitting fashion is provided at the end surface of the roller.

2. The thrust roller bearing according to claim 1, wherein a radius of curvature of the convex provided in an arc shape at a radially outer side of the inner wall surface of the pocket is equal to or smaller than a radius of curvature of the concave provided in an arc shape at the end surface of the roller.

3. The thrust roller bearing according to claim 1, wherein the convexes are provided on both the radially outer side and the radially inner side of the inner wall surface of each of the pockets.

4. The thrust roller bearing according to claim 1, wherein an apex center of the convex provided at the pocket is offset in a direction and by an amount in which the roller moves.

5. The thrust roller bearing according to claim 1, wherein
a corrugated bent portion having corrugated shape in a radial direction is provided at a radial middle area of the cage,
the corrugated bent portion includes a radially outer projected portion, a radially inner projected portion and a middle projected portion which are equally projected in a thickness direction of the cage alternately in one side and in the other side, and
the radially outer projected portion and the radially inner projected portion are projected in the thickness direction of the cage in the one side, and the middle projected portion is projected in the thickness direction in the other side.

6. The thrust roller bearing according to claim 5, wherein
claws projecting toward an inside of the pocket are provided at three apex portions of the radially outer projected portions, the radially inner projected portions and the middle projected portions.

7. A thrust roller bearing comprising:
a pair of races;
a cage which is interposed between the pair of races and is provided with pockets at plural circumferential positions thereof; and
a plurality of rollers retained by the respective pockets of the cage,
wherein a convex projecting toward a rotating center of an axial end surface of the roller is provided at at least a radially outer side among the radially outer side and an inner wall surface of each of the pockets, and
wherein a concave contacting with the convex in a substantial fitting fashion is provided at the end surface of the roller.

8. The thrust roller bearing according to claim 7, wherein a radius of curvature of the convex provided in an arc shape at a radially outer side of the inner wall surface of the pocket is equal to or smaller than a radius of curvature of the concave provided in an arc shape at the end surface of the roller.

9. The thrust roller bearing according to claim 7, wherein the convexes are provided on both the radially outer side and the radially inner side of the inner wall surface of each of the pockets.

10. The thrust roller bearing according to claim 7, wherein an apex center of the convex provided at the pocket is offset in a direction and by an amount in which the roller moves.

11. The thrust roller bearing according to claim 7, wherein
a corrugated bent portion having corrugated shape in a radial direction is provided at a radial middle area of the cage,
the corrugated bent portion includes a radially outer projected portion, a radially inner projected portion and a middle projected portion which are equally projected in a thickness direction alternately in one side and in the other side, and
the radially outer projected portion and the radially inner projected portion are projected in the thickness direction of the cage in the one side, and the middle projected portion is projected in the thickness direction in the other side.

12. The thrust roller bearing according to claim 11, wherein
claws projecting toward an inside of the pocket are provided at three apex portions of the radially outer projected portions, the radially inner projected portions and the middle projected portions.
